# EUROPÄISCHE PATENTSCHRIFT

(11) **EP 1 352 388 B1**
(45) Veröffentlichungstag und Bekanntmachung des Hinweises auf die Patenterteilung: **27.04.2005**
(21) Anmeldenummer: 01991834.1
(22) Anmeldetag: 12.12.2001
(51) Int. Cl.: G10L 15/00, G10L 15/28

(54) **VERFAHREN UND ANORDNUNG ZUR SPRACHERKENNUNG FÜR EIN KLEINGERÄT**
SPEECH RECOGNITION METHOD AND SYSTEM FOR A HANDHELD DEVICE
PROCEDE ET SYSTEME DE RECONNAISSANCE VOCALE POUR APPAREIL PORTABLE

(30) Priorität: 14.12.2000 EP 00127457
(43) Veröffentlichungstag der Anmeldung: 15.10.2003
(73) Patentinhaber: SIEMENS AKTIENGESELLSCHAFT, 80333 München (DE)
(72) Erfinder: NIEMÖLLER, Meinrad, 83607 Holzkirchen (DE)
(86) Internationale Anmeldenummer: PCT/EP2001/014616
(87) Internationale Veröffentlichungsnummer: WO 2002/049004

(56) Entgegenhaltungen:
- EP-A- 0 848 536
- WO-A-99/21171
- US-A- 5 677 990
- US-A- 5 995 928
- GILLOIRE A ET AL: "Innovative speech processing for mobile terminals: an annotated bibliography" SIGNAL PROCESSING,NL,AMSTERDAM, Bd. 80, Nr. 7, Juli 2000 (2000-07), Seiten 1149-1166, XP004200934 ISSN: 0165-1684
- LAMEL L ET AL: "The LIMSI Arise system" SPEECH COMMUNICATION,ELSEVIER SCIENCE PUBLISHERS, AMSTERDAM,NL, Bd. 31, Nr. 4, August 2000 (2000-08), Seiten 339-353, XP004210025 ISSN: 0167-6393

## Beschreibung

Die Erfindung betrifft ein Verfahren zur Spracherkennung für ein mit einem Telekommunikations- bzw. Datennetz verbundenes Kleingerät nach dem Oberbegriff der Ansprüche 1 und 2 sowie eine entsprechende Anordnung bzw. ein entsprechendes Gerät.

Elektronische Kleingeräte, deren Siegeszug in der Konsumelektronik mit dem tragbaren bzw. Taschen-Transistorradio begonnen und sich mit dem Walkman und später dem Discman im Bereich der Audiogeräte sowie mit Taschenrechnern und Taschenübersetzern sowie Datenbasen im Bereich der Datenverarbeitungs- und -speichergeräte eindrucksvoll fortgesetzt hat, werden immer leistungsfähiger und komplexer und stellen teilweise recht hohe Anforderungen an die Bedienfertigkeit des Benutzers. Auch intelligente Dialogsysteme, wie sie heute bei komplexen Kleingeräten wie Mobiltelefonen oder Handheld-PCs angewandt werden, stellen in ihrer Bedienung noch relativ hohe Anforderungen an die Fertigkeiten und die Geduld ihrer Benutzer. Insbesondere im Interesse vielbeschäftigter Nutzer mit professionellem Einsatzschwerpunkt einerseits und älterer Menschen sowie von Kindern andererseits liegt daher die Einführung der Spracherkennung zur Steuerung solcher Geräte.

Kleingeräte mit Sprachsteuerung sind - insbesondere als Mobiltelefone - bereits bekannt und auf dem Markt erhältlich. Die dort implementierten Spracherkennungssysteme können aber wegen der trotz aller Fortschritte in der Prozessor- und Speichertechnik notwendigerweise begrenzten Verarbeitungs- und Speicherkapazität von Kleingeräten nicht die Leistungsfähigkeit der Spracherkennungssysteme erreicht, wie sie bei PCs beispielsweise für die Texteingabe verwendet werden. Derzeit sind vielfach nur Wortschätze von einigen hunderten von Worten realisierbar. Hierbei tritt das generelle Problem der Fehlerkennungen beim Einsprechen unbekannter Worte, welches bei allen Spracherkennungssystemen existiert, besonders gravierend hervor.

In diesem Zusammenhang offenbart Gilloire et al. "Innovative speech processing for mobile terminals: an annotated bibliography", Signal Processing 80 (2000), S. 1149-1166 Ansätze für ein Verfahren zur Spracherkennung für ein mit einem Mobilfunknetzwerk verbundenes mobiles System, bei dem die für den Erkennungsvorgang erforderlichen Algorithmen ganz (S. 1150, rechte Spalte) oder teilweise (S. 1160, linke Spalte) im Netzwerk bzw. auf einem mit dem Netzwerk verbundenen Server implementiert sind. Spracherkennung wird in der Publikation allerdings nur unter dem Aspekt der Erkennung eines kontinuierlich gesprochenen Redeflusses behandelt. Auch wird nicht diskutiert, wie diese Ansätze technisch zu realisieren wären.

In der menschlichen Kommunikation wird für die Erkennung unbekannter Worte bzw. Schreibweisen seit Jahrhunderten auf das Buchstabieren zurückgegriffen. Beim einfachen Aussprechen einer Folge von Buchstaben ist aber bereits bei der menschlichen Kommunikation die Fehlerrate relativ hoch, und aktuelle Spracherkennungssysteme liefern noch weniger befriedigende Ergebnisse. Insbesondere Buchstabengruppen wie die Gruppen c, b, d, e, g, p, t, w oder m, n oder a, h, k bergen große Verwechslungsgefahren, da sie sehr ähnlich klingen.

Bei einer Folge von Buchstaben kann der Mensch allerdings sein Sprachgefühl und Kontextwissen nutzbringend einsetzen und eindeutig oder wahrscheinlich unsinnige Buchstabenkombinationen, die sich aus der Fehlerkennung einzelner Buchstaben einer Folge ergeben, ausscheiden und an ihre Stelle sinnvolle Kombinationen "denken". Neben dem erwähnten Kontextwissen sind ihm auch die Kenntnis wahrscheinlicher Buchstabenfolgen und von Redundanzen in Worten hilfreich. Hierdurch wird in der menschlichen Kommunikation die Fehlerrate beim Buchstabieren wesentlich gesenkt.

Es ist auch bekannt, bei Spracherkennungssystemen die Wahrscheinlichkeit von bestimmten Buchstabenfolgen für die Erkennung von durch Buchstabieren eingesprochenen Worten zu nutzen. Entsprechende Systeme werden im übrigen bereits seit längerem bei Mobiltelefonen für die Eingabe von Kurznachrichten (SMS) über die Tastatur genutzt und haben sich dort bewährt. Grundsätzlich ist auch die Nutzung von Kontextwissen in Spracherkennungssystemen möglich, diese erfordert jedoch sehr große Speicherkapazitäten und ist daher bei Kleingeräten derzeit praktisch nicht realisierbar.

Der Erfindung liegt daher die Aufgabe der Bereitstellung eines gattungsgemäßen Verfahrens sowie einer entsprechenden Anordnung zugrunde, mit denen die Erkennung von gesprochenen Buchstaben- bzw. Zeichenketten mit vertretbarem Aufwand wesentlich verbessert werden kann.

Diese Aufgabe wird hinsichtlich ihres Verfahrensaspektes durch ein Verfahren mit den Merkmalen des Anspruchs 1 oder 2 und hinsichtlich ihres Vorrichtungsaspektes durch eine Anordnung bzw. ein Kleingerät mit den Merkmalen des Anspruchs 10 gelöst.

Die Erfindung schließt den grundlegenden Gedanken ein, mindestens die speicherplatzaufwendigen Schritte der Erkennung einer an einem Kleingerät eingesprochenen Buchstabenfolge aus dem Kleingerät heraus zu verlagern. Weiter schließt sie den Gedanken ein, für diese Verfahrensteile einen im Telekommunikations- bzw. Datennetz angeordneten zentralen Server zu nutzen, der hierfür über praktisch unbegrenzte Kapazität verfügt. Auf dem Kleingerät verbleibt vorzugsweise nur eine einfache Buchstabenkettenerkennung, für die wenig Rechenleistung und Speicherplatz benötigt wird und die daher auch mit Mikrocontrollern und DSPs (Digital Signal Processors) der erwähnten Kleingeräte möglich ist.

Durch den Einsatz von Hintergrund- bzw. Kontextwissen auf dem Server können auch dann insgesamt sehr gute Erkennungsleistungen auf Wortebene erreicht werden, wenn bei der vorangegangenen initialen Buchstabenkettenerkennung eine sehr hohe Fehlerrate aufgetreten war. Die Erfindung sieht im Sinne der erwähnten Arbeitsteilung zwischen dem Kleingerät als Client und dem zentralen Server mithin eine Sprache-Text-Wandlung der gesprochenen Buchstaben- bzw. Zeichenketten in eine vorläufige geschriebene Buchstaben- bzw. Zeichenkette beim Kleingerät, anschließend deren Übertragung an den Server, danach eine Überprüfung und gegebenenfalls Korrektur dieser Buchstaben- bzw. Zeichenketten beim Server und die Zurückübertragung der geprüften Buchstaben- bzw. Zeichenkette an das Kleingerät vor, wonach beim Kleingerät eine weitere einfache Verarbeitung im Sinne einer Bestätigung des empfangenen Wortes erfolgen kann.

In einer alternativen Ausführung der Erfindung ist vorgesehen, daß die Erkennung bereits beim Server abgeschlossen und das endgültige Wort an das Kleingerät zurückübertragen, von diesem empfangen und dort gespeichert wird. Es versteht sich, daß eine Speicherung beim Kleingerät sinnvollerweise auch dann erfolgt, wenn die endgültige Fixierung des erkannten Wortes dort erfolgt.

Die beim Server liegende wesentliche Verfahrenskomponente läuft insbesondere anhand einer oder mehrerer Buchstaben-Verwechslungsmatrixen bzw. eines Buchstaben-Sprachmodells ab, wobei dieses aufgrund der praktisch unbegrenzten Ressourcen des Servers aufwendige Algorithmen und umfangreiche Kontext-Datenbasen nutzen kann.

In einer bevorzugten Ausführung der Erfindung wird am Kleingerät in Verbindung mit der Buchstaben- bzw. Zeichenkette durch den Benutzer ein Wortklassifikator eingegeben und zusammen mit der vorläufigen geschriebenen Buchstaben- bzw. Zeichenkette zum Server übertragen, wo er als Zusatzinformation für den dort ablaufenden Erkennungsprozeß (Überprüfung und gegebenenfalls Korrektur) genutzt wird. Im Kleingerät wird insbesondere aus der Buchstabenketten-Suche ein sogenannter Worthypothesengraph gebildet und zum Server übertragen und auf dem Server auf diesem Worthypothesengraphen eine Suche in einer Textlexikon-Datenbasis mit mehreren Speicherbereichen oder in mehreren Lexikon-Datenbasen ausgeführt.

Bei den durch den Wortklassifikator spezifizierten Wortklassen kann es sich beispielsweise um Personennamen, Straßen- oder Ortsnamen, oder Internetadressen oder auch um Fachtermini eines bestimmten Gebietes o. ä. handeln, für die jeweils ein Verzeichnis bzw. Lexikon beim Server geführt wird. Die zentralisierte Verarbeitung bietet hier auch den besonderen Vorteil einer unaufwendigen Aktualisierung und Pflege des Datenbestandes - was angesichts der schnell zunehmenden Anzahl von Domain-Namen insbesondere für Internet-Adressen sehr wichtig ist.

In einer wirtschaftlich besonders interessanten Variante wird das vorgeschlagene Verfahren als Dienst einer Telekommunikationsgesellschaft bzw. eines Dienstanbieters realisiert und als solcher den Benutzern insbesondere gegen Entgelt, fallweise aber auch als kostenloser Service, angeboten.

Je nach konkreter Ausführung des Telekommunikations- bzw. Datennetzes und des zugehörigen Endgerätes werden jeweils bevorzugt die höchstentwickelten verfügbaren Ressourcen für die Übertragung der eingegeben neuen Worte zum Server genutzt. Bei einem an ein Mobilfunknetz nach dem GSM-Standard angeschlossenen Mobiltelefon erfolgt die Übertragung bevorzugt als Text-Kurznachricht per SMS, und bei einem WAP-fähigen Mobiltelefon bevorzugt als Textnachricht nach dem WAP-Standard. Für künftige Mobilfunkstandards werden deren Protokolle entsprechende Möglichkeiten bieten - insbesondere wird für ein UMTS-Netz die Übertragung mittels eines Standard-Internetprotokolls (HTTP) möglich sein. Bei einem an ein ISDN-Netz angeschlossenes Festnetztelefon erfolgt die Übertragung über einen Datenkanal des ISDN-Netzes. Die Eingabe erfolgt hier bevorzugt (wie beim Mobiltelefon) über eine alphanumerische Tastatur oder per MFV.

Neben den oben erwähnten Ausführungen kann das Kleingerät insbesondere auch als Handheld-PC bzw. PDA zum Anschluß an ein Telekommunikations- und/oder Datennetz oder auch als mobile Eingabeeinheit eines Fernbedien-Steuersystems ausgeführt sein.

Es weist insbesondere eine zur Anzeige mehrerer Buchstaben- bzw. Zeichenketten ausgebildete Anzeigeeinrichtung und eine Bestätigungseinrichtung zur Bestätigung eines auf dem Server erkannten Wortes auf. Diese kann insbesondere als Softkey in Verbindung mit einer Menüsteuerung oder auf einem Touch-Screen realisiert sein.

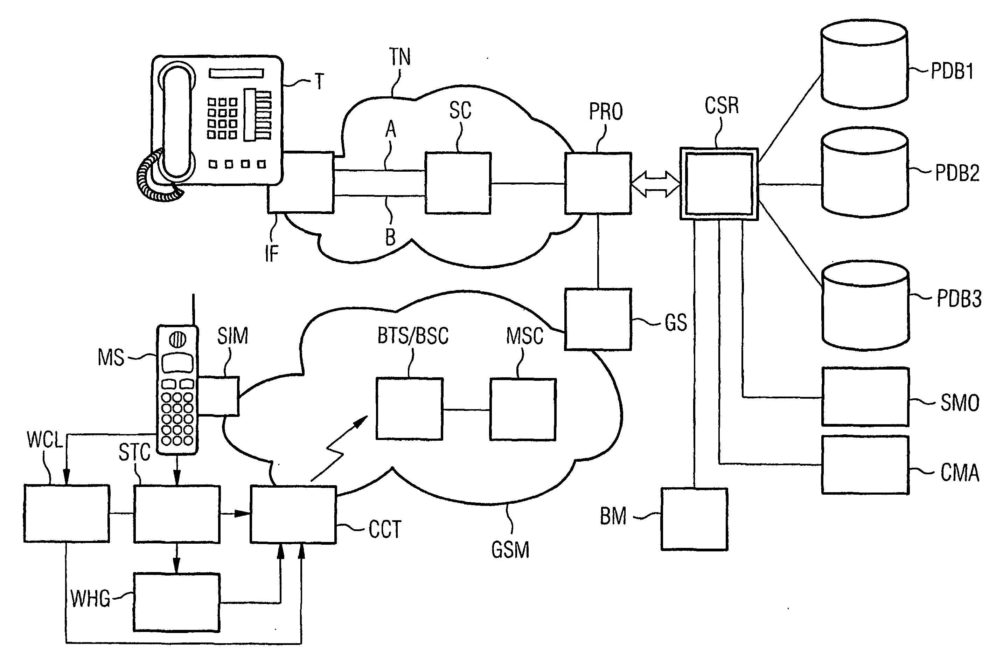

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt - in einer synoptischen Darstellung, die aber bei Bestehen der wirtschaftlichen Voraussetzungen auch technisch realisierbar ist - bevorzugte Ausführungen der Erfindung auf einem ISDN-Festnetztelefon T und einem GSM-Mobiltelefon MS, die an ein leitungsgebundenes Telefonnetz TN bzw. ein Mobilfunknetz GSM angeschlossen sind, im Zusammenwirken mit einem Buchstabenfolgen-Erkenner CSR, der beiden Kommunikationsnetze TN und GSM gemeinsam zugeordnet ist. Das Festnetztelefon T und das Mobiltelefon MS stehen über eine ISDN-Telefonleitung ISDN bzw. eine (nicht gesondert bezeichnete) Luftschnittstelle sowie eine Basisstation BTS/BSC jeweils mit einer Vermittlungsstelle SC bzw. MSC ihres Netzes in Verbindung. Über diese wird direkt (beim Festnetz) bzw. indirekt über einen zusätzlichen Gateway-Server GS eine Verbindung zu einem gemeinsamen Verwaltungs- und Dienstzentrum PRO eines Dienstanbieters hergestellt, der sowohl im Festnetz TN als auch im Mobilfunknetz GSM einen Transkriptionsdienst als gebührenpflichtigen Dienst anbietet.

In der Figur sind für das Mobiltelefon MS interne Signalverarbeitungskomponenten skizzenhaft dargestellt, die am Gesamtprozeß der Buchstabenkettenerkennung beteiligt sind; über analoge Komponenten kann natürlich auch das Festnetztelefon T verfügen. Es handelt sich hierbei um einen Sprache-Text-Wandler STC zur Umwandlung der eingesprochenen Buchstabenketten in Buchstabenketten in Textform, einen hiermit in Verbindung stehenden Worthypothesengraphen WHG sowie einen mit der Eingabetastatur in Verbindung stehenden Wortklassifikator WCL und schließlich eine Buchstabenketten-Sendestufe CCT, die von den eingangs genannten Komponenten gespeist wird.

Dem Buchstabenfolgen-Erkenner CSR sind mehrere Textlexikon-Datenbasen PDB1 bis PDB3 sowie (schematisch in Gestalt von zwei Funktionsblöcken dargestellt) eine Buchstaben-Verwechslungsmatrix CMA sowie ein Buchstaben-Sprachmodell SMO zur Erarbeitung zugeordnet. Weiterhin ist dem Buchstabenfolgen-Erkenner eine Vergebührungseinrichtung BM zur Vergebührung einer Nutzung des Transkriptionsdienstes zugeordnet.

Beim Festnetztelefon T ist eine ISDN-Schnittstelleneinrichtung IF eingebaut, die in der Figur lediglich symbolisch als gesonderter Block gezeigt ist. Die ISDN-Leitung zwischen dem Festnetztelefon T und der zugehörigen Vermittlungsstelle SC hat in bekannter Weise einen Sprachkanal A und einen unabhängigen Datenkanal B.

Wie oben erwähnt, wird im Mobiltelefon nach der Sprache-Text-Wandlung im Sprache-Text-Wandler STC und unter Heranziehung des Worthypothesengraphen WHG eine vorläufige Buchstabenketten-Erkennung für vom Benutzer buchstabierte Worte ausgeführt. Das Erkennungsergebnis wird über die Buchstabenketten-Sendestufe CCT zusammen mit dem durch den Benutzer per Tastatur eingegebenen Wortklassifikator an das Verwaltungs- und Dienstzentrum PRO des Providers und den damit den dort angebundenen Buchstabenfolgen-Erkenner CSR übertragen. Dieser führt unter Zugriff auf die Referenzlexikon-Datenbasen PDB1 bis PDB3, die Buchstaben-Verwechslungsmatrix CMA und das Buchstaben-Sprachmodell SMO eine Überprüfung der vom Mobiltelefon ausgegebenen Buchstabenkette an einem umfangreichen sprachlichen Hintergrund- und Kontextwissen der jeweiligen Landessprache des Benutzers durch. Die Auswahl der Landessprache erfolgt dabei aufgrund der in der SIM-Karte gespeicherten Benutzerdaten und/oder aufgrund einer durch den Benutzer zu Beginn des entsprechenden Menüs getroffenen Auswahl. Es versteht sich, daß landessprachtypische Aussprachen von Zeichen, Buchstabiergewohnheiten etc. hierbei berücksichtigt werden.

Ergibt sich bei der Überprüfung, daß für andere Buchstabenketten als die vom Mobiltelefon ausgegebene vorläufige Buchstabenkette, d. h. andere buchstabierte Worte, signifikante Wahrscheinlichkeiten bestehen, so werden all diese Worte an das Mobiltelefon zurückübertragen und auf dessen Display zusammen mit einer an den Benutzer gerichteten Auswahlaufforderung angezeigt. Nachdem der Benutzer durch Betätigung eines Softkey seine Auswahl getroffen hat, ist das zutreffende Wort festgelegt und wird in den internen Wortschatzspeicher übernommen. (Es ist auch möglich, daß ausschließlich die Buchstabenkette bzw. das Wort mit der durch den Buchstabenketten-Erkenner ermittelten höchsten Wahrscheinlichkeit an das Mobiltelefon zurückübertragen und dort als endgültiges Ergebnis des Erkennungsvorganges verarbeitet und (wahlweise) gespeichert wird.)

Analog arbeitet die überprüfte Buchstabenketten-Erkennung für am Festnetztelefon T eingesprochene Buchstabenketten. Die Zurückübertragung der geprüften und gegebenenfalls korrigierten Buchstabenkette oder -ketten erfolgt hier insbesondere über den B-Kanal des ISDN-Netzes. Auch hier kann eine Vorauswahl bzw. Bestätigung der bei der zentralen Überprüfung beim Buchstabenketten-Erkenner CSR einzusetzenden Wissensquellen durch den Benutzer erfolgen, oder diese werden entsprechend der Landes- bzw. Ortsnetzkennzahl des Benutzers des Festnetztelefones ausgewählt.

Die Ausführung der Erfindung ist nicht auf dieses Beispiel beschränkt, sondern im Rahmen der Ansprüche auch in einer Vielzahl von Abwandlungen möglich, die im Rahmen fachgemäßen Handelns liegen.

## Patentansprüche

1. Verfahren zur Spracherkennung für ein mit einem Telekommunikationsnetz bzw. Datennetz (GSM, TN) verbundenes Kleingerät (MS, T),
wobei das Verfahren eine Erkennung von Buchstaben- bzw. Zeichenketten als Worte umfaßt, welche als geschriebenes Wort ausgegeben und/oder zu Steuerzwecken genutzt werden, und die Erkennung der Buchstaben- bzw. Zeichenketten mindestens teilweise in einem über das Telekommunikations- bzw. Datennetz mit dem Kleingerät verbundenen zentralen Server (PRO) ausgeführt wird,
**dadurch gekennzeichnet, daß**
die zu erkennenden Buchstaben- bzw. Zeichenketten aus gesprochenen einzelnen Buchstaben bzw. Zeichen gebildet werden und in dem Kleingerät (MS, T) in einem ersten Transformationsschritt eine Sprache-Text-Wandlung der gesprochenen Buchstaben- bzw. Zeichenkette in eine vorläufige geschriebene Buchstaben- bzw. Zeichenkette ausgeführt,
die vorläufige geschriebene Buchstaben- bzw. Zeichenkette an den zentralen Server (PRO) übertragen,
in dem Server in einem zweiten Transformationsschritt die vorläufige Buchstaben- bzw. Zeichenkette anhand einer Buchstaben-Verwechslungsmatrix (CMA) und/oder eines Buchstaben-Sprachmodells (SMO) überprüft und gegebenenfalls korrigiert und das Wort erstellt und
das Wort an das Kleingerät zurückübertragen und von diesem empfangen und in diesem verarbeitet und/oder gespeichert wird.

2. Verfahren zur Spracherkennung für ein mit einem Telekommunikationsnetz bzw. Datennetz (GSM, TN) verbundenes Kleingerät (MS, T),
wobei das Verfahren eine Erkennung von Buchstaben- bzw. Zeichenketten als Worte umfaßt, welche als geschriebenes Wort ausgegeben und/oder zu Steuerzwecken genutzt werden, und
die Erkennung der Buchstaben- bzw. Zeichenketten mindestens teilweise in einem über das Telekommunikations- bzw. Datennetz mit dem Kleingerät verbundenen zentralen Server (PRO) ausgeführt wird,
**dadurch gekennzeichnet, daß**
die zu erkennenden Buchstaben- bzw. Zeichenketten aus gesprochenen einzelnen Buchstaben bzw. Zeichen gebildet werden und in dem Kleingerät (MS, T) in einem ersten Transformationsschritt eine vorläufige Sprache-Text-Wandlung der gesprochenen Buchstaben- bzw. Zeichenkette in eine vorläufige geschriebene Buchstaben- bzw. Zeichenkette ausgeführt,
die vorläufige geschriebene Buchstaben- bzw. Zeichenkette an den zentralen Server übertragen,
in dem Server in einem zweiten Transformationsschritt die vorläufige Buchstaben- bzw. Zeichenkette anhand einer Buchstaben-Verwechslungsmatrix und/oder eines Buchstaben-Sprachmodells überprüft und gegebenenfalls korrigiert und mindestens eine überprüfte und korrigierte Buchstaben- bzw. Zeichenkette erstellt,
die geprüfte Buchstaben- bzw. Zeichenkette oder die geprüften Buchstaben- bzw. Zeichenketten an das Kleingerät zurückübertragen und von diesem empfangen werden und
in dem Kleingerät in einem dritten Transformationsschritt aus der geprüften Buchstaben- bzw. Zeichenkette oder den geprüften Buchstaben- bzw. Zeichenketten das Wort gebildet und gespeichert und/oder verarbeitet wird.

3. Verfahren nach einem der vorangehenden Ansprüche,
**dadurch gekennzeichnet, daß** am Kleingerät (MS, T) in Verbindung mit der Buchstaben- bzw. Zeichenkette ein Wortklassifikator eingegeben,
der Wortklassifikator zusammen mit der vorläufigen Buchstaben- bzw. Zeichenkette zum Server (PRO) übertragen und als Zusatzinformation für die Erkennung ausgewertet wird.

4. Verfahren nach Anspruch 5,
**dadurch gekennzeichnet, daß**
im Kleingerät (MS, T) aus der Buchstabenketten-Erkennung ein Worthypothesengraph gebildet und zum Server (PRO) übertragen und auf dem Server auf dem Worthypothesengraphen eine Suche in einer Textlexikon-Datenbasis mit mehreren, jeweils einer Wortklasse zugeordneten Speicherbereichen ausgeführt wird.

5. Verfahren nach einem der Ansprüche 2 bis 4,
**dadurch gekennzeichnet, daß**
die geprüfte Buchstaben- bzw. Zeichenkette oder geprüften Buchstaben- bzw. Zeichenketten auf dem Kleingerät (MS, T) zur endgültigen Festlegung durch den Nutzer angezeigt wird bzw. werden.

6. Verfahren nach Anspruch 5,
**dadurch gekennzeichnet, daß**
die Anzeige der Buchstaben- bzw. Zeichenketten in der Reihenfolge ihrer durch den Server bestimmten Wahrscheinlichkeit erfolgt.

7. Verfahren nach einem der vorangehenden Ansprüche,
**dadurch gekennzeichnet, daß**
der beim Server (PRO) ablaufende Teil der Erkennung als Dienst im Telekommunikations- bzw. Datennetz organisiert ist.

8. Verfahren nach einem der vorangehenden Ansprüche,
**dadurch gekennzeichnet, daß**
die Übertragung von und zu einem Mobilfunk-Endgerät (MS) als Kurznachricht oder über das WAP über ein Mobilfunknetz (GSM), insbesondere unter Einbeziehung einer Verbindung zu einem IP-Netz, erfolgt.

9. Verfahren nach einem der Ansprüche 1 bis 7,
**dadurch gekennzeichnet, daß**
die Übertragung von und zu einem Festnetztelefon (T) über einen ISDN-Datenkanal (B) eines ISDN-Festnetzes (ISDN) erfolgt.

10. Anordnung, welche Mittel zur Durchführung jedes einzelnen Schrittes des Verfahrens nach einem der vorangehenden Ansprüche enthält,
mit einer Mehrzahl von an das Telekommunikations- bzw. Datennetz (GSM, ISDN) angeschlossenen Endgeräten (MS, T) und einen an eine Dienstzentrale des Telekommunikations- bzw. Datennetzes angeschlossenen Server (PRO),
**dadurch gekennzeichnet, dass**
der Server (PRO) Mittel (CSR) zur Erkennung der Buchstaben- bzw. Zeichenkette aufweist.

11. Anordnung nach Anspruch 10,
**dadurch gekennzeichnet, daß**
die Mittel (CSR) zur Erkennung der Buchstaben- bzw. Zeichenkette mindestens eine Buchstaben-Verwechslungsmatrix (CMA) und/oder mindestens ein Buchstaben-Sprachmodell (SMO) aufweisen.

12. Anordnung nach Anspruch 10 oder 11,
**gekennzeichnet durch**
eine dem Server (PRO) zugeordnete Vergebührungseinrichtung (BM) zur Vergebührung des **durch** den Server geleisteten Teils der Erkennung der Buchstaben- bzw. Zeichenkette als Dienst.

13. Anordnung nach einem der Ansprüche 10 bis 12,
**dadurch gekennzeichnet, daß**
das Kleingerät als Mobilfunk-Endgerät (MS) ausgebildet ist, welches über ein Mobilfunknetz (GSM), insbesondere unter Einbeziehung einer Verbindung zu einem IP-Netz, mit dem Server verbunden ist.

14. Anordnung nach einem der Ansprüche 10 bis 13,
**dadurch gekennzeichnet, daß**
das Kleingerät als Festnetztelefon (T) ausgebildet ist, welches über einen ISDN-Datenkanal (B) eines ISDN-Festnetzes (ISDN) mit dem Server verbunden ist.

15. Anordnung nach einem der Ansprüche 10 bis 14,
**dadurch gekennzeichnet, daß**
das Kleingerät als über ein Telefon-Festnetz, insbesondere ISDN-Festnetz, ein Mobilfunknetz oder ein Datennetz mit dem Server verbundenes Datenverarbeitungs- oder Bediengerät, insbesondere als Handheld-PC oder mobile Eingabeeinheit eines Fernbedien-Steuersystems ausgebildet ist.

16. Anordnung nach einem der Ansprüche 10 bis 15,
**dadurch gekennzeichnet, daß**
das Kleingerät eine zur Anzeige mehrerer Buchstaben- bzw. Zeichenketten ausgebildete Anzeigeeinrichtung und eine Betätigungseinrichtung zur endgültigen Festlegung des Wortes aufweist.

17. Anordnung nach Anspruch 16,
**dadurch gekennzeichnet, daß**
die Anzeigeeinrichtung zur Anzeige der Buchstaben- bzw. Zeichenketten gemäß ihrer durch den Server bestimmten Wahrscheinlichkeit ausgebildet ist.

18. Anordnung nach Anspruch 16 oder 17,
**dadurch gekennzeichnet, daß**
die Bestätigungseinrichtung einen Touch-Screen oder eine Menüsteuerung in Verbindung mit einer Eingabetaste, insbesondere einem Softkey, aufweist.

## Claims

1. Speech recognition method for a small device (MS, T) that is connected to a telecommunications network or to a data network (GSM, TN),
whereby the method involves a recognition of letter strings or character strings, which are composed of spoken individual letters or characters, as words that are output as written words and/or are used for control purposes and the recognition of the letter strings or character strings is performed, at least in part, in a central server (PRO) that is connected to the small device via the telecommunications network or data network
**characterized in that**,
the letters or character strings to be recognized are formed from individual spoken letters or characters and in a transformation step a speech-to-text conversion of the spoken letter string or character string into a provisional written letter string or character string is performed in the small device (MS, T),
the provisional written letter string or character string is transmitted to the central server (PRO),
the provisional written letter string or character string is checked and, if necessary, corrected in a second transformation step on the server, using a letter confusion matrix (CMA) and/or a letter speech model (SMO), and the word is created, and
the word is transmitted back to the small device and is received by the latter where it is processed and/or stored.

2. Speech recognition method for a small device (MS, T) that is connected to a telecommunications network or to a data network (GSM, TN),
whereby the method involves a recognition of letter strings or character strings, which are composed of spoken individual letters or characters, as words that are output as written words and/or are used for control purposes and the recognition of the letter strings or character strings is performed, at least in part, in a central server (PRO) that is connected to the small device via the telecommunications network or data network
**characterized in that**,
the letters or character strings to be recognized are formed from spoken individual letters or characters and a provisional speech-to-text conversion of the spoken letter string or character string into a provisional written letter string or character string is performed in the small device (MS, T) in a first transformation step,
the provisional written letter string or character string is transmitted to the central server,
the provisional written letter string or character string is checked and, if necessary, corrected in a second transformation step on the server, using a letter confusion matrix and/or a letter speech model, and at least one checked and corrected letter string or character string is created,
the checked letter string or character string or the checked letter strings or character strings are transmitted back to the small device and are received by the latter, and
in the small device in a third transformation step the word is formed from the checked letter string or character string or from the checked letter strings or character strings, and is stored and/or processed.

3. Method according to one of the preceding claims,
**characterized in that**,
a word classifier is entered on the small device (MS, T) in conjunction with the letter string or character string,
the word classifier is transferred together with the provisional letter string or character string to the server (PRO) and is evaluated as supplementary information for the recognition process.

4. Method according to Claim 2,
**characterized in that**
a word hypothesis graph is formed in the small device (MS, T) from the letter string recognition and is transferred to the server (PRO), and a search is performed on the server on the word hypothesis graph in a text dictionary database using a plurality of storage areas, each assigned to a word class.

5. Method according to one of Claims 2 to 4,
**characterized in that**
the checked letter string or character string, or checked letter strings or character strings, is/are displayed on the small device (MS, T) for final definition by the user.

6. Method according to Claim 5,
**characterized in that**
the display of the letter strings or character strings takes place in the sequence of their probability determined by the server.

7. Method according to one of the preceding claims,
**characterized in that**
the section of the recognition process running on the server (PRO) is organized as a service in the telecommunications or data network.

8. Method according to one of the preceding claims,
**characterized in that**
the transmission from and to a mobile radio terminal device (MS) takes place as a short message or by way of the WAP using a mobile radio network (GSM), particularly including a connection to an IP network.

9. Method according to one of Claims 1 to 7,
**characterized in that**
the transmission from and to a fixed-network telephone (T) takes place by way of an ISDN data channel (B) of an ISDN fixed network (ISDN).

10. Arrangement containing means for executing each individual step of the method according to one of the preceding claims,
with a plurality of terminal devices (MS, T) connected to the telecommunications network or data network (GSM, ISDN), and
a server (PRO) connected to a services center in the telecommunications network or data network,
**characterized in that**
the server (PRO) has means (CSR) for recognition of the letter string or character string.

11. Arrangement according to Claim 10,
**characterized by**
the means (CSR) for recognition of the letter string or character string comprise at least one letter confusion matrix (CMA) and/or at least one letter speech model (SMO).

12. Arrangement according to Claim 10 or 11,
**characterized by**
a billing means (BM) assigned to the server (PRO) for billing for the section of the recognition process for the letter string or character string which is handled by the server as a service.

13. Arrangement according to one of Claims 10 to 12,
**characterized in that**
the small device is designed as a mobile radio terminal device (MS) which is connected by way of a mobile radio network (GSM) to the server, particularly including a connection to an IP network.

14. Arrangement according to one of Claims 10 to 13,
**characterized in that**
the small device is designed as a fixed-network telephone (T) which is connected by way of an ISDN data channel (B) of an ISDN fixed network (ISDN) to the server.

15. Arrangement according to one of Claims 10 to 14,
**characterized in that**
the small device is designed as a data processing or operating device, in particular as a handheld PC or mobile input unit for a remote-operation control system, which is connected to the server by way of a telephone fixed network, in particular an ISDN fixed network, a mobile radio network or a data network.

16. Arrangement according to one of Claims 10 to 15,
**characterized in that**
the small device has a display facility designed for displaying a plurality of letter strings or character strings and a confirmation facility for final definition of the word recognized.

17. Arrangement according to Claim 16,
**characterized in that**
the display facility is designed for displaying the letter strings or character strings in accordance with their probability determined by the server.

18. Arrangement according to Claim 16 or 17,
**characterized in that**
the confirmation facility has a touch screen or a menu-driven control system in conjunction with an Enter key, in particular a soft key.

## Revendications

1. Procédé de reconnaissance vocale pour un petit appareil (MS, T) communicant avec un réseau de télécommunications resp. de données (GSM, TN),
le procédé comprenant une reconnaissance de chaînes de lettres resp. caractères en tant que mots édités sous forme de mot écrit et/ou utilisés à des fins de commande et la reconnaissance des chaînes de lettres resp. caractères étant effectuée au moins en partie dans un serveur central (PRO) communicant avec le petit appareil par l'intermédiaire du réseau de télécommunication resp. de données,
**caractérisé en ce que**
les chaînes de lettres resp. caractères à reconnaître sont formées de lettres resp. caractères distincts parlés et dans le petit appareil (MS, T), dans une première étape de transformation, une conversion voix-texte de la chaîne de lettres resp. caractères parlés en une chaîne provisoire de lettres resp. caractères écrits est effectuée,
la chaîne provisoire de lettres resp. caractères écrits est transmise au serveur central (PRO),
dans le serveur central, dans une deuxième étape de transformation, la chaîne provisoire de lettres resp. caractères est vérifiée et le cas échéant corrigée à l'aide d'une matrice de confusion de lettres (CMA) et/ou d'un modèle vocal de lettres (SMO) et le mot est établi et
le mot est retransmis au petit appareil et reçu par celui-ci et traité et/ou mémorisé dans celui-ci.

2. Procédé de reconnaissance vocale pour un petit appareil (MS, T) communicant avec un réseau de télécommunications resp. de données (GSM, TN),
le procédé comprenant une reconnaissance de chaînes de lettres resp. caractères en tant que mots édités sous forme de mot écrit et/ou utilisés à des fins de commande et la reconnaissance des chaînes de lettres resp. caractères étant effectuée au moins en partie dans un serveur central (PRO) communicant avec le petit appareil par l'intermédiaire du réseau de télécommunication resp. de données,
**caractérisé en ce que**
les chaînes de lettres resp. caractères à reconnaître sont formées de lettres resp. caractères distincts parlés et dans le petit appareil (MS, T), dans une première étape de transformation, une conversion provisoire voix-texte de la chaîne de lettres resp. caractères parlés en une chaîne provisoire de lettres resp. caractères écrits est effectuée,
la chaîne provisoire de lettres resp. caractères écrits est transmise au serveur central,
dans le serveur central, dans une deuxième étape de transformation, la chaîne provisoire de lettres resp. caractères écrits est vérifiée et le cas échéant corrigée à l'aide d'une matrice de confusion de lettres et/ou d'un modèle vocal de lettres et au moins une chaîne vérifiée et corrigée de lettres resp. caractères est établie,
la ou les chaînes vérifiées de lettres resp. caractères sont retransmises au petit appareil et reçues par celui-ci et
dans le petit appareil, dans une troisième étape de transformation, à partir de la ou des chaînes vérifiées de lettres resp. caractères, le mot est formé et mémorisé et/ou traité.

3. Procédé selon l'une des revendications précédentes,
**caractérisé en ce que**
sur le petit appareil (MS, T), en combinaison avec la chaîne de lettres resp. caractères, un classificateur de mots est introduit,
le classificateur de mots, ensemble avec la chaîne provisoire de lettres resp. caractères, est transmis au serveur (PRO) et exploité comme information complémentaire pour la reconnaissance.

4. Procédé selon la revendication 5,
**caractérisé en ce que**
dans le petit appareil (MS, T), à partir de la reconnaissance de la chaîne de lettres, un graphe d'hypothèses de mots est construit et transmis au serveur (PRO) et sur le serveur, sur le graphe d'hypothèses de mots, une recherche est effectuée dans une base de données lexicale avec plusieurs zones de mémoire affectées respectivement à une classe de mots.

5. Procédé selon l'une des revendication 2 à 4,
**caractérisé en ce que**
la ou les chaîne(s) vérifiée(s) de lettres resp. caractères est resp. sont affichée(s) sur le petit appareil (MS, T) pour détermination définitive par l'utilisateur.

6. Procédé selon la revendication 5,
**caractérisé en ce que**
l'affichage des chaînes de lettres resp. caractères se fait dans l'ordre de leur vraisemblance déterminée par le serveur.

7. Procédé selon l'une des revendications précédentes,
**caractérisé en ce que**
la partie de la reconnaissance, qui est exécutée chez le serveur (PRO), est organisée comme service au sein du réseau de télécommunications resp. de données.

8. Procédé selon l'une des revendications précédentes,
**caractérisé en ce que**
la transmission en provenance et à destination d'un terminal radio-mobile (MS) se fait sous forme de message court ou par le WAP par l'intermédiaire d'un réseau radio-mobile (GSM), en particulier en intégrant une liaison vers un réseau IP.

9. Procédé selon l'une des revendications 1 à 7,
**caractérisé en ce que**
la transmission en provenance et à destination d'un téléphone fixe (T) se fait par l'intermédiaire d'un canal de données ISDN (B) d'un réseau ISDN fixe (ISDN).

10. Système comprenant des moyens pour la mise en oeuvre de chaque étape distincte du procédé selon l'une des revendications précédentes,
avec une pluralité de terminaux (MS, T) raccordés au réseau de télécommunication resp. de données (GSM, ISDN) et un serveur (PRO) raccordé à une centrale de service du réseau de télécommunication resp. de données,
**caractérisé en ce que**
le serveur (PRO) comporte des moyens (CSR) de reconnaissance de la chaîne de lettres resp. caractères.

11. Système selon la revendication 10,
**caractérisé en ce que**
les moyens (CSR) de reconnaissance de la chaîne de lettres resp. caractères comportent au moins une matrice de confusion de lettres (CMA) et/ou au moins un modèle vocal de lettres (SMO).

12. Système selon la revendication 10 ou 11,
**caractérisé par**
un dispositif de facturation (BM) affecté au serveur (PRO) pour la facturation de la partie de la reconnaissance de la chaîne de lettres resp. caractères, qui est réalisée par le serveur comme service.

13. Système selon l'une des revendications 10 à 12,
**caractérisé en ce que**
le petit appareil est réalisé en tant que terminal radio-mobile (MS) communicant avec le serveur par l'intermédiaire d'un réseau radio-mobile (GSM), en particulier en intégrant une liaison vers un réseau IP.

14. Système selon l'une des revendications 10 à 13,
**caractérisé en ce que**
le petit appareil est réalisé en tant que téléphone fixe (T) communicant avec le serveur par l'intermédiaire d'un canal de données ISDN (B) d'un réseau ISDN fixe (ISDN).

15. Système selon l'une des revendications 10 à 14,
**caractérisé en ce que**
le petit appareil est réalisé en tant qu'appareil de traitement de données resp. de commande communicant avec le serveur par l'intermédiaire d'un réseau téléphonique fixe, notamment un réseau ISDN fixe, un réseau radio-mobile ou un réseau de données, en particulier en tant que ordinateur portatif ou unité d'entrée mobile d'un système de commande télécommandé.

16. Système selon l'une des revendications 10 à 15,
**caractérisé en ce que**
le petit appareil comporte un dispositif d'affichage configuré pour l'affichage de plusieurs chaînes de lettres resp. caractères et un dispositif d'actionnement pour la détermination définitive du mot.

17. Système selon la revendication 16,
**caractérisé en ce que**
le dispositif d'affichage pour l'affichage des chaînes de lettres resp. caractères est configuré selon leur vraisemblance déterminée par le serveur.

18. Système selon la revendication 16 ou 17,
**caractérisé en ce que**
le dispositif d'actionnement comporte un écran tactile ou une sélection par menu associée à une touche d'entrée, en particulier un clavier souple.
